# EUROPEAN PATENT APPLICATION

(11) **EP 3 530 422 A1**
(43) Date of publication of application: **28.08.2019**
(21) Application number: 18158755.1
(22) Date of filing: 27.02.2018
(51) Int. Cl.: B25J 15/06, B25J 11/00, B25J 19/00, B66C 1/02, B65G 47/91

(54) **SUCTION CUP DEVICE FOR AUTOMATION INDUSTRY**

(71) Applicant: PIAB AB, 183 04 Täby (SE)
(72) Inventor: HERRSTRÖM, Jonas, 183 04 Täby (SE)
(74) Representative: Brann AB

(57) **Abstract**

A suction cup (1) device for a vacuum powered tool, the suction cup (1) in a first or upper end (2) arranged to be brought into fluid flow communication with a vacuum source and in an opposite second or lower end (3) arranged to be brought tightly into contact with the surface of an object to be handled by the suction cup (1),
wherein the second or lower end (3) comprises a suction cup (4) having a sealing surface (5), which sealing surface (5) is provided for direct contact with the object;
wherein the suction cup (4) is made of a rubber compound, characterized in that the rubber compound comprises metal detective (6) and antimicrobial additives (6).

## Description

### TECHNICAL FIELD

The present invention is related to a suction cup device for automation industry, in particular food automation industry.

### BACKGROUND

Suction cup devices for automation industry, often in short referred to as "suction cups", are used in vacuum transporting and/or lifting systems in a production line for automation industry, wherein a plurality of vacuum suction-cups are provided on transporting devices for lifting and/or transporting objects. Suction cups are used in food automation industry to transport objects, such as food of different kinds, which may impose particular requirements of the suction cups since the food is often sensitive to external influence and in particular contamination of the food. Also other objects may be sensitive to external influence.

Sometimes problems occur if the suction cups, which are typically of rubber material, wear or even break. Pieces and/or fragments of the suction cups may come loose and there may be a risk that such a piece and/or fragment contaminate the food, or other object, being sensitive to external influence. Depending on the size of the piece and/or fragment, contamination by the suction cup pieces and/or fragment in the food might be very difficult to detect in time, if at all, such that it can be removed. For instance, in a production line for automation industry, such a piece and/or fragment may even end up packaged together with the food.

Also other types of contamination of food such as by bacteria cause problems.

A common example is objects that are being lifted from one place to another in a production line. In this sequence, suction cups and negative pressure, typically vacuum, generates a grip and gets in contact with the food object, lifts a first object and transport it from a start position to a destination position. The same suction cup will then return to the start position and lift the next object. This continuous handling of different objects by the same suction cup, for instance one and the same suction cup handling different pieces of chicken meat or other bacteria sensitive food, can result in the growth of bacteria on the suction cup, at least on a surface thereof, which will likely result in problems with contamination of bacteria forcing an operator to deal with the contamination problems such as wash the suction cups frequently. Similar problems with contamination may arise in other areas but in production lines in food industry.

### SUMMARY

It is an objective of the invention to provide a suction cup that does not contaminate an object of a production line. This objective is obtained by the solutions according to various aspects of the present invention as follows below.

According to a first aspect and an embodiment of the present invention, there is provided a suction cup device for automation industry. The suction cup device is provided for a vacuum powered tool. The suction cup device is in a first or upper end arranged to be brought into fluid flow communication with a vacuum source and in an opposite second or lower end arranged to be brought tightly into contact with a surface of an object to be handled by the suction cup gripping and transporting the object. The second or lower end comprises a suction cup having a sealing surface, which sealing surface is provided for direct contact with the object. The suction cup is made of a rubber compound, which comprises magnetically detective and antimicrobial additives. This provides protection against both pieces and/or fragments of the rubber suction cup coming loose and thereby contaminating the object coming loose, as well as bacteria.

Herein, the term "antimicrobial" includes the term "anti-bacterial".

According to a second embodiment of the present invention including the first embodiment, the magnetically detectable material is magnetic metallic material.

Typically, the magnetically detectable magnetic metallic material comprises metal chips. This implies that a metal detecting device will be able to detect and find pieces and/or fragments of the rubber suction cup coming loose and thereby contaminating the object.

According to a second aspect and including the first aspect and embodiment, the antimicrobial additives are evenly spread in the rubber compound of the suction cup. Since the antimicrobial additives are evenly spread in the rubber compound, there is no difference depending on which surface of the suction is contaminated with bacteria.

The various embodiments of the present invention provides a suction cup that would minimize bacteria growth as well as fragments of loose piece from a worn-out suction cup. Customers will have the benefit of rarely maintenance, minimized risk of having fragments packed in products to end customers. Replacement of suction cups could be done more rarely since the detected fragments would be an early warning sign of worn-out suction cups that may need replacement.

### BRIEF DESCRIPTION OF DRAWINGS

FIG.1 schematically in cross-section shows a half of a suction cup device according to an embodiment of the invention.
FIG. 2 shows part of the cross-section of the suction cup in the inset in FIG. 1 in enlargement and showing the magnetically detective and antimicrobial additives.

### DETAILED DESCRIPTION OF EMBODIMENTS

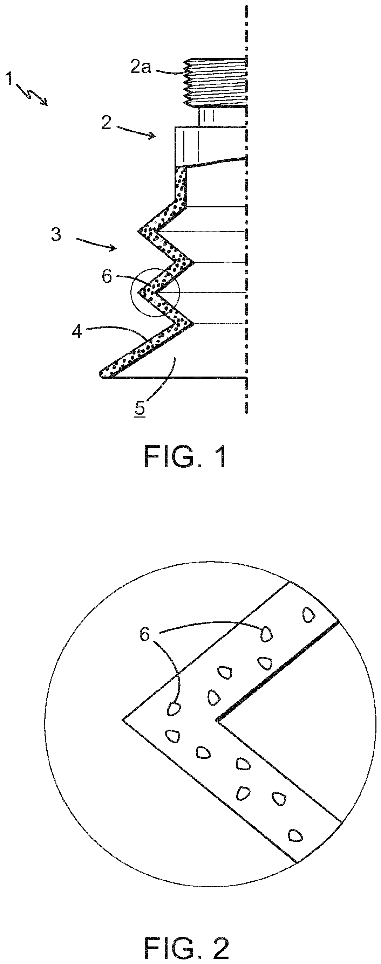

Now is referred to FIG. 1, which schematically in cross-section shows a half of a suction cup device 1 according to an embodiment of the present invention, respectively.

In FIG. 1, there is shown a suction cup 1 device 1 for a vacuum powered tool. The suction cup device 1 is shown assembled. For simplicity, only one half-section of the suction cup device is shown.

The suction cup device 1 in a first or upper end 2 is arranged to be brought into fluid flow communication with a vacuum source and is in an opposite second or lower end 3 arranged to be brought tightly into contact with a surface of an object to be handled by the suction cup 1 gripping and transporting the object.

The second or lower end 3 comprises a suction cup 4 having a sealing surface 5, which sealing surface 5 is provided for direct contact with the object.

The suction cup 4 is made of a rubber compound. The rubber compound comprises magnetically detective and antimicrobial additives 6.

The suction cups are typically made of materials approved by the FDA (for instance according to FDA 21 CFR 177.2600) and the European Union, for instance according to EU directive 1935/2004. The suction cups can be transparent with or without colour pigment, and comprise a detectable (traceable) material, such as magnetic material.

The upper first part 2 typically comprises a fitting 2a.

The fittings available can be of so-called "threaded" or "push-on" type. As regards the "threaded fittings", the suction cup device 1 have to be screwed onto the vacuum tool when assembling (mounting) the suction cups. In FIG. 1 a threaded fitting 2a is shown.

The height of the suction cup 3, and in particular the height of a bilge part 3a is typically adapted such that objects lifted by the bilge part 3a are not harmed.

Typically, the rubber compound of the suction cup 4 comprises magnetically detective and antimicrobial additives 6. The magnetically detective and antimicrobial additives 6 can be detected by means of an equipment (not shown) such as a metal detector that can detect the magnetically detective and antimicrobial additives 6. In this way the problem with pieces of broken, as well as fragments of, worn suction cups is solved since the metal detecting equipment detects the pieces and/or fragments of the suction cups and some measure can be taken to remove those pieces and fragments. An operator may for instance manually detect and remove those parts or a magnet may be used to detect and remove those pieces and fragments. Thus, the effect of the worn suction cups can be minimized in a simple way and end customers may not be affected at all, since there will be no pieces or fragments packed with the product.
The problem with bacteria growth is reduced by the antiantimicrobial additives 6 in the compound of the suction cup 4

Now is referred also to FIG. 2. FIG. 2 shows a part (shown by the inset in FIG. 1) of the cross-section of the suction cup 4. 1 in enlargement and showing the magnetically detective and antimicrobial additives 6.The additives 6 comprises detectable magnetic metallic material herein comprising evenly distributed metal flakes.

According to a second aspect and including the first aspect and embodiment, the antimicrobial additives are evenly spread in the rubber compound of the suction cup. Since the antimicrobial additives are evenly distributed in the rubber compound, there is no difference depending on which surface of the suction is contaminated with bacteria.

Typically, the detectable material is magnetically metallic material.

Typically, the detectable magnetically metallic material comprises metal flakes.

Typoically, the magnetically detective and antimicrobial additives (6) comprises antimicrobial additives that are evenly spread in the rubber compound of the suction cup (4).

The invention has here been described with reference to specific embodiments only for illustrative purposes only. The claimed scope of protection is thus drafted to accommodate also such considered embodiments that are not specifically shown here but lie within the knowledge of those skilled in the art to practice with the guidance of the above description.

## Claims

1. A suction cup (1) device for a vacuum powered tool, the suction cup device (1) in a first or upper end (2) arranged to be brought into fluid flow communication with a vacuum source and in an opposite second or lower end (3) arranged to be brought tightly into contact with a surface of an object to be handled by the suction cup (1) gripping and transporting the object,
wherein the second or lower end (3) comprises a suction cup (4) having a sealing surface (5), which sealing surface (5) is provided for direct contact with the object;
wherein the suction cup (4) is made of a rubber compound, **characterized in that** the suction cup (4) made of a rubber compound comprises magnetically detective and antimicrobial additives (6).

2. Suction cup device according to claim 1, **characterized in that** the magnetically detective and antimicrobial additives (6) comprises detectable material.

3. Suction cup device according to claim 2, **characterized in that** the detectable material is magnetically metallic material.

4. Suction cup device according to claim 3, **characterized in that** the detectable magnetically metallic material comprises metal chips.

5. Suction cup according to any of the preceding claims, **characterized in that** the magnetically detective and antimicrobial additives (6) comprises antimicrobial additives that are evenly spread in the rubber compound of the suction cup (4).
